# FASCICULE DE BREVET EUROPEEN

(11) **EP 1 003 087 B1**
(45) Date de publication et mention de la délivrance du brevet: **21.01.2004**
(21) Numéro de dépôt: 99420228.1
(22) Date de dépôt: 15.11.1999
(51) Int. Cl.: G05B 19/4097

(54) **Méthode de transfert de données entre un système de conception et un système de fabrication assistes par ordinateur, application d'une telle méthode et interface entre de tels systèmes**
Verfahren zur Daten-Übertragung zwischen einem Rechnerunterstützten Entwurfssystem und einem Rechnerunterstützten Herstellungssystem, Verwendung eines solchen Verfahrens und Schnittstelle zwischen den genannten Systemen
Method to transfer data between a computer assisted design system and a computer assisted manufacturing system, applying such a method and interface between such systems

(30) Priorité: 17.11.1998 FR 9814584
(43) Date de publication de la demande: 24.05.2000
(73) Titulaire: COMPAGNIE INDUSTRIELLE D'APPLICATIONS THERMIQUES C.I.A.T., 01350 Culoz (FR)
(72) Inventeur: Michaud, Jean-Marie, 01350 Culoz (FR); Raisin, Claude, 73310 Ruffieux (FR); Blancard, Eric, 73310 Motz (FR); Gerra, Frédéric, 01300 Belley (FR)
(74) Mandataire: Myon, Gérard Jean-Pierre

(56) Documents cités:
- EP-A- 0 503 642
- EP-A- 0 604 660
- WO-A-96/36921
- US-A- 5 581 676
- US-A- 5 796 986

## Description

L'invention a trait à une méthode de transfert de données informatiques entre un système de conception assistée par ordinateur et un système de fabrication assistée par ordinateur, voir par exemple US-A-5 796 986. L'invention a également trait à une application de cette méthode et à une interface entre de tels systèmes, permettant de mettre en oeuvre cette méthode.

Dans de nombreux domaines industriels, et par exemple dans celui de la tôlerie, il est connu d'utiliser un système de Conception Assistée par Ordinateur (CAO) pour définir des pièces à fabriquer. Un tel système permet de générer un fichier informatique comprenant des informations relatives à la géométrie d'une pièce. Par ailleurs, des systèmes de Fabrication Assistée par Ordinateur (FAO) sont utilisés au sein d'un bureau des méthodes et/ou en ateliers pour générer un programme et des gammes de fabrication en fonction de la géométrie des pièces, du parc de machines et des outillages utilisés.

Il existe un grand nombre de systèmes de CAO et de FAO sur le marché et ces systèmes ne sont généralement pas complètement compatibles entre eux, notamment du fait qu'ils sont produits par des sociétés différentes agissant dans des domaines techniques différents. Avec les systèmes connus, le transfert d'un fichier créé par un système de CAO vers un système de FAO permet généralement le traitement des formes standard, telles que les arêtes rectilignes, les cercles ou les ellipses, mais les informations relatives aux formes complexes sont le plus souvent perdues ou polluées lors d'un tel transfert. Ceci est particulièrement gênant en phase d'industrialisation où les pièces à réaliser sont définies à la fois par les dimensions, les orientations et les sens des usinages et par des déformations spécifiques réalisées sur les ébauches, par exemple par enlèvement de matière (copeaux), découpe, emboutissage ou autres.

Avec les systèmes classiques, il est nécessaire d'exploiter sous forme papier ces informations, c'est-à-dire de les saisir à nouveau dans le système de fabrication assistée par ordinateur, à partir d'un plan imprimé par le système de CAO. Ceci résulte dans une perte de temps importante, alors que les risques d'erreurs d'interprétation ou de fausses manipulations sont non nuls.

C'est à ces inconvénients qu'entend plus particulièrement remédier l'invention en proposant une méthode de transfert et une interface qui permettent de transférer efficacement des informations relatives à des formes complexes entre un système de CAO et un système de FAO.

Dans cet esprit, l'invention concerne une méthode de transfert de données informatiques entre un système de conception assistée par ordinateur (CAO) et un système de fabrication assistée par ordinateur (FAO), ces données incluant des informations relatives à la géométrie d'un objet à fabriquer, caractérisée en ce qu'elle consiste à définir certains éléments au moins de cet objet par :
- accès à une première bibliothèque à partir du système de conception ;
- sélection d'au moins un article prédéfini dans cette première bibliothèque ;
- importation des références de cet article dans le fichier de définition de l'objet dans le système de conception ;
- transfert du fichier de définition de l'objet depuis le système de conception vers le système de fabrication, en identifiant cet article par référence ;
- accès à une seconde bibliothèque associée au système de fabrication et sélection de données de fabrication en fonction de références correspondant à celles de l'article dans le fichier de définition et
- importation des données de fabrication dans le fichier de fabrication de l'objet.

Grâce à l'invention, les formes complexes à former sont repérées, lors du transfert entre le système de CAO et le système de FAO, par référence, alors qu'elles peuvent être définies avec toutes les précisions nécessaires dans la seconde bibliothèque. Il n'existe donc plus de problème de compatibilité entre le système de CAO et le système de FAO pour autant que la référence du ou des articles sélectionnés, qui est une information alphanumérique simple associée à un graphisme particulier, est efficacement transmise entre ces systèmes.

Les formes complexes à réaliser sont ainsi banalisées au niveau de la conception des pièces et repérées graphiquement dans la première bibliothèque, à l'aide de segments de droites et d'arcs de cercle en représentation bi-dimensionnelle. Cette solution, qui consiste à utiliser des entités de bas niveau, est pertinente quel que soit le système de CAO utilisé, le transfert vers le système de FAO pouvant être effectué par une interface standard du marché en vue d'une reconnaissance automatique de forme, de position et de sens de travail de la matière.

Selon des aspects avantageux de l'invention, la méthode incorpore une ou plusieurs des caractéristiques suivantes :
- l'article comprend une représentation standardisée d'une forme complexe à obtenir par déformation (emboutissage, poinçonnage, etc...) ou usinage (copeaux, laser, etc..) ;
- les données de fabrication stockées dans la seconde bibliothèque comprennent, pour chaque article, au moins l'une des informations suivantes : origine du poinçonnage, de l'usinage ou de la déformation, sens de déformation de la matière, orientation angulaire de la déformation, information quant au revêtement ou l'état de surface de la matière à traiter, sens et/ou vitesse d'usinage.
- chaque article est identifié, dans la première bibliothèque, par un symbole simple permettant de reconnaître son type et ses caractéristiques principales.

L'invention trouve, par exemple, une application particulière pour la fabrication de pièces en tôle emboutie, les articles correspondants aux déformations obtenues par emboutissage d'une tôle. On peut, en particulier, prévoir une application pour la fabrication de carrosseries de matériels. Les articles correspondent alors chacun à un collet, à une agrafe, à une butée, etc. de dimensions précisées. D'autres applications avantageuses concernent l'utilisation de gammes d'usinage modélisées dans le système de CAO et correspondant à des références ou des associations de références en aval de la conception, c'est-à-dire dans le système de FAO.

L'invention concerne également une interface entre un système CAO et un système FAO permettant de mettre en oeuvre la méthode telle que précédemment décrite. Cette interface comporte :
- une première bibliothèque accessible à partir du système de conception, cette première bibliothèque comprenant une liste d'articles correspondant à des caractéristiques géométriques particulières d'un objet, chaque article étant identifié par une référence ;
- une seconde bibliothèque associée au système de fabrication, cette seconde bibliothèque comprenant, pour chaque référence correspondant à un article de la première bibliothèque, un ensemble de données de fabrication compatibles avec le système de fabrication et permettant d'obtenir les caractéristiques géométriques particulières correspondantes ;
- des moyens pour accéder, dans la seconde bibliothèque, à des données de fabrication en fonction de références correspondant à au moins un article sélectionné par un utilisateur dans la première bibliothèque et
- des moyens pour importer, dans le fichier de fabrication de l'objet, les données de fabrication accédées.

Les deux bibliothèques sont respectivement dédiées au système de CAO et au système de FAO, de sorte qu'elles sont pleinement compatibles avec ces systèmes et que l'information qu'elles sont susceptibles de délivrer à ces systèmes n'est pas altérée lors du transfert.

Selon un aspect avantageux de l'invention, les moyens pour accéder à la seconde bibliothèque et les moyens pour importer des données sont prévus pour fonctionner automatiquement lors du transfert de données entre le système de conception et le système de fabrication. Grâce à cet aspect de l'invention, aucune intervention de l'utilisateur, susceptible d'effectuer une fausse manoeuvre, n'est nécessaire.

Selon d'autres aspects avantageux de l'invention,
- la première bibliothèque comprend, pour chaque article, une référence et une représentation graphique compatible avec le système de conception ;
- la seconde bibliothèque comprend, pour chaque article, une référence et une gamme de fabrication permettant d'obtenir les caractéristiques géométriques de l'article, et notamment, le type de l'usinage, de la déformation, le sens de traitement de la matière, l'orientation angulaire, des informations quant au revêtement ou à l'état de surface de la matière à traiter, le sens et/ou la vitesse d'usinage.

L'invention sera mieux comprise et d'autres avantages de celle-ci apparaîtront plus clairement à la lumière de la description qui va suivre d'une interface entre un système de conception et un système de fabrication assistés par ordinateur conforme à son principe, donnée uniquement à titre d' exemple et faite en référence aux dessins annexés dans lesquels :
- la figure 1 est un synoptique de principe d'une interface conforme à l'invention et
- la figure 2 est un exemple de tableau de représentations utilisées, avec l'interface de la figure 1, pour des déformations usuelles.

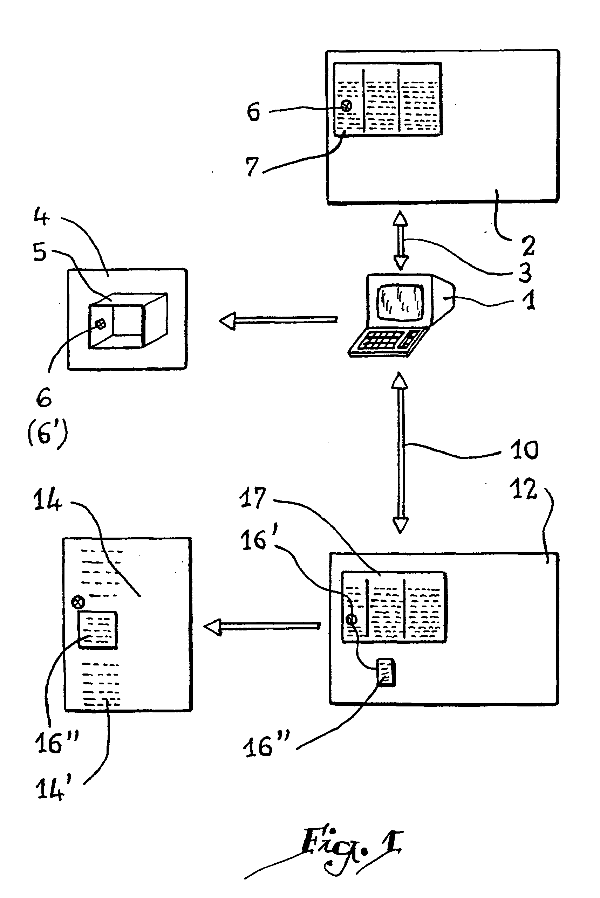

A la figure 1, un système de conception assistée par ordinateur (CAO) comprend une console 1 reliée à une unité centrale 2 par une liaison informatique appropriée 3. Le système de CAO est prévu pour produire un fichier informatique figuré symboliquement avec la référence 4, ce fichier étant représentatif d'une pièce à fabriquer 5.

On considère que la pièce 5 est un élément de carrosserie d'un échangeur de chaleur obtenu par emboutissage d'une tôle. Compte tenu de l'utilisation prévue de l'élément 5, celui-ci peut devoir comporter un collet, une agrafe, une butée ou un alésage lui permettant de coopérer avec son environnement immédiat, par exemple avec des tubes d'échange thermique.

Un collet, une agrafe, une butée ou un alésage sont obtenus par déformation ou enlèvement de la matière constitutive de l'élément 5. L'opération à réaliser doit être définie avec précision, notamment en ce qui concerne l'orientation, le sens et la vitesse de déplacement d'un outil, poinçon ou fraise et les propriétés de la matière formant l'élément 5. Ces propriétés de la matière influent sur la géométrie et la nature des déformations et des usinages obtenus, car elles conditionnent la résistance mécanique de la matière à l'emboutissage ou à l'usinage. Pour toutes les raisons qui précèdent, les déformations à obtenir par emboutissage et les usinages à effectuer sont complexes et les gammes de fabrication permettant de les obtenir doivent être définies avec soin, en fonction de ces différents paramètres.

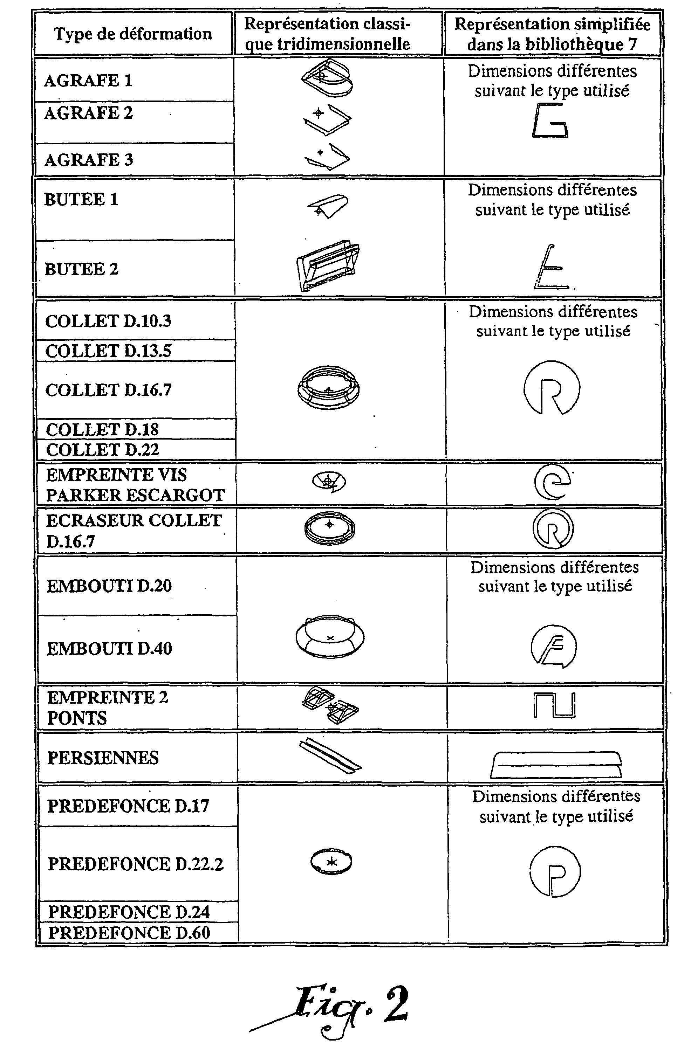

Conformément à l'invention, lorsqu'un utilisateur du système CAO sait qu'il doit prévoir une déformation 6 sur la pièce 5, il accède à une bibliothèque 7, appartenant à l'unité centrale 2 ou stockée sur un périphérique, afin de sélectionner une image 6' de la déformation 6. Cette image comprend une représentation graphique de la déformation 6, telle représentée dans la colonne de droite de la figure 2. Cette image 6' comprend également des informations relatives à la taille de la déformation. En effet, des collets de tailles différentes peuvent être créés, ces collets ayant des représentations graphiques simplifiées analogues alors que leurs tailles respectives sont différentes. L'image 6' est également identifiée par une référence alphanumérique. Lorsque l'utilisateur a sélectionné l'image 6' dans la bibliothèque 7, il incorpore cette image dans le fichier 4 à l'emplacement souhaité sur la pièce 5.

Le fait d'utiliser une représentation graphique simplifiée permet à une personne qui consulte ultérieurement le fichier 4, sur écran ou sur papier, de reconnaître au premier coup d'oeil la nature de la déformation prévue.

Lors de la mise en fabrication de la pièce 5, le fichier informatique 4 est transféré par une liaison informatique 10 à une unité centrale 12 d'un système de fabrication assistée par ordinateur (FAO). L'unité centrale 12 est prévue pour générer un fichier informatique 14 comprenant des données 14' de fabrication de la pièce 5.

Lors du transfert du fichier 4, l'unité centrale 12 identifie l'image 6' par sa référence et accède à une seconde bibliothèque 17 dans laquelle sont stockées, pour chaque référence d'image de la bibliothèque 7, des données de fabrication correspondantes. Dans le cas d'espèce, des données de fabrication 16" sont associées à une référence 16' correspondant celle de l'image 6' du fichier 4. L'unité centrale 12 est prévue pour incorporer les données 16" dans le fichier 14 de façon à ce que ces données soient prises en compte par l'unité de fabrication.

Dans le cas d'espèce, les données 16" contiennent toutes les informations nécessaires à la réalisation d'une déformation du type prévu par l'utilisateur du système de CAO avec les dimensions programmées, grâce à un pilotage adéquat de l'outil d'emboutissage.

Comme il ressort de la figure 2, une unique image de la bibliothèque 7 peut correspondre à différents types ou à différentes tailles de déformation. Ces types et ces tailles de déformation étant pré-établis, le système de FAO est en mesure de reconnaître, à partir d'une image et d'une ou plusieurs cotes caractéristiques, de quelle déformation il s'agit.

L'invention a été décrite en référence à trois types d' emboutissage, à savoir un collet, une agrafe ou une butée. Il est bien entendu qu' elle est applicable à tout type de déformations, dans le domaine de la tôlerie ou dans d'autres domaines. L'invention est également applicable à l'usinage d'une pièce, par exemple à la formation d'un alésage, mais également à d'autres types d'usinage. Dans ce cas, les données 16 " de la seconde bibliothèque peuvent être relatives au sens et/ou à la vitesse d'usinage ou à d'autres paramètres.

De façon générale, des données techniques nombreuses peuvent être stockées dans la seconde bibliothèque afin d'être exploitées par l'unité de fabrication en fonction des références portées sur les fichiers créés par le système de conception. Toutes ces variantes font également l'objet de la présente invention. En particulier, l'invention n'est pas limitée aux exemples représentés à la figure 2 et concerne toutes les opérations de mise en forme de la matière constitutive d'une pièce.

## Revendications

1. Méthode de transfert de données informatiques entre un système de conception assistée par ordinateur (CAO) et un système de fabrication assistée par ordinateur (FAO), lesdites données incluant des informations relatives à la géométrie d'un objet à fabriquer, **caractérisée en ce qu'**elle consiste à définir certains éléments au moins de la géométrie dudit objet par :
- accès à une première bibliothèque (7) à partir dudit système de conception (2) ;
- sélection d'au moins un article (6') prédéfini dans ladite première bibliothèque ;
- importation des références dudit article (6') dans le fichier de définition (4) dudit objet (5) dans le système de conception ;
- transfert (10) dudit fichier de définition dudit objet depuis ledit système de conception vers ledit système de fabrication (12) en identifiant ledit article par référence (6'-16') ;
- accès à une seconde bibliothèque (17) associée au système de fabrication et sélection de données (16'') de fabrication en fonction de références (16') correspondant à celles dudit article (6') dans ledit fichier de définition et
- importation desdites données de fabrication (16") dans le fichier de fabrication (14) dudit objet.

2. Méthode de transfert de données selon la revendication 1, **caractérisée en ce que** ledit article (6') comprend une représentation standardisée d'une forme complexe à obtenir par déformation ou usinage.

3. Méthode de transfert de données selon la revendication 2, **caractérisée en ce que** les données de fabrication (16") stockées dans ladite seconde bibliothèque (17) comprennent, pour chaque article (6'), au moins l'une des informations suivantes :
- origine du poinçonnage, de l'usinage ou de la déformation ;
- sens de déformation de la matière ;
- orientation angulaire de la déformation ;
- information quant au revêtement ou à l'état de surface de la matière à traiter ;
- sens et/ou vitesse d'usinage.

4. Méthode de transfert de données selon l'une des revendications précédentes, **caractérisée en ce que** chaque article (6') est identifié, dans ladite première bibliothèque, par un symbole simple (fig 2) permettant de reconnaître son type ou ses caractéristiques principales.

5. Application de la méthode de transfert de données selon l' une des revendications précédentes à la fabrication de pièces (5) en tôle emboutie, lesdits articles (6') correspondant aux déformations obtenues par emboutissage d'une tôle.

6. Application selon la revendication 5 pour la fabrication de carrosseries (5) de matériels.

7. Interface entre un système de conception assistée par ordinateur (CAO) et un système de fabrication assistée par ordinateur (FAO), ladite interface étant prévue pour le transfert des données incluant des informations relatives à la géométrie d'un objet à fabriquer, caractérisée en qu'elle comporte :
- une première bibliothèque (7) accessible à partir dudit système de conception (2), ladite première bibliothèque comprenant une liste d'articles (6') correspondant à des caractéristiques géométriques particulières dudit objet (5), chaque article étant identifié par une référence ;
- une seconde bibliothèque (17) associée audit système de fabrication (12), ladite seconde bibliothèque comprenant, pour chaque référence (16') corresppondant à un article (6') de ladite première bibliothèque, un ensemble de données de fabrication (16'') compatibles avec ledit système de fabrication et permettant d'obtenir les caractéristiques géométriques particulières correspondantes ;
- des moyens (12) pour accéder dans ladite seconde bibliothèque à des données de fabrication (16'') en fonction de références (16') correspondant à au moins un article (6') sélectionné par un utilisateur dans ladite première bibliothèque et
- des moyens (12) pour importer, dans le fichier de fabrication (14) dudit objet, les données de fabrication accédées.

8. Interface selon la revendication 7, **caractérisée en ce que** lesdits moyens (12) pour accéder à ladite seconde bibliothèque (17) et lesdits moyens pour importer des données (16") sont prévus pour fonctionner automatiquement lors du transfert de données entre ledit système de conception (2) et ledit système de fabrication (12).

9. Interface selon l'une des revendications 7 ou 8, **caractérisée en ce que** ladite première bibliothèque (7) comprend, pour chaque article (6'), une référence et une représentation graphique (fig 2) compatibles avec ledit système de conception (2).

10. Interface selon l'une des revendications 7 à 9, caractérisée en que ladite seconde bibliothèque (17) comprend, pour chaque article (6'-16'), une référence (16') et une gamme de fabrication (16" ) permettant d'obtenir les caractéristiques géométriques dudit article, et notamment
- le type de l'usinage ou de la déformation ;
- le sens de traitement de la matière ;
- l'orientation angulaire de l'usinage ou de la déformation ;
- des informations quant au revêtement ou à l'état de surface de la matière à traiter ou
- le sens et/ou la vitesse d'usinage.

## Claims

1. Method of transferring computer data between a computer-assisted design (CAD) system and a computer-assisted manufacturing (CAM) system, said data including information relating to the geometry of an object to be manufactured, **characterised in that** it comprises defining certain elements of at least the geometry of said object by:
- accessing a first library (7) from said design system (2) ,
- selecting at least one predefined item (6') in said first library,
- importing the references for said item (6') into the file (4) defining said object (5) in the design system,
- transferring (10) said file defining said object from said design system to said manufacturing system (12) by identifying said item by reference (6' - 16'),
- accessing a second library (17) associated with the manufacturing system and selecting manufacturing data (16") as a function of references (16') corresponding to those for said item (6') in said defining file and
- importing said manufacturing data (16") into the file (14) for manufacturing said object.

2. Method of transferring data according to claim 1, **characterised in that** said item (6') comprises a standardised representation of a complex shape to be obtained by forming or machining.

3. Method of transferring data according to claim 2, **characterised in that** the manufacturing data (16") stored in said second library (17) comprises, for each item (6'), at least one of the following pieces of information:
- origin point for punching, machining or forming,
- direction of forming of material,
- angular orientation of the forming,
- information relating to the coating or surface finish of the material to be processed,
- direction and/or speed of machining.

4. Method of transferring data according to one of the foregoing claims, **characterised in that** each item (6') is identified in said first library by a simple symbol (Fig. 2) which enables its type or main characteristics to be recognised.

5. Application of the method of transferring data according to one of the forgoing claims to the manufacture of parts (5) made of stamped sheet metal, said items (6') corresponding to the deformations obtained by stamping a piece of sheet metal.

6. Application according to claim 5 for the manufacture of casings (5) for equipment.

7. Interface between a computer-assisted design (CAD) system and a computer-assisted manufacturing (CAM) system, said interface being arranged for the transfer of data including information relating to the geometry of an object to be manufactured, **characterised in that** it comprises:
- a first library (7) accessible from said design system (2), said first library comprising a list of items (6') corresponding to particular geometrical characteristics of said object (5), each item being identified by a reference,
- a second library (17) associated with said manufacturing system (12), said second library comprising, for each reference (16') corresponding to an item (6') in said first library, a set of manufacturing data (16") compatible with said manufacturing system and enabling the appropriate particular geometrical characteristics to be obtained,
- means (12) for accessing manufacturing data (16") in said second library as a function of references (16') corresponding to at least one item (6') which is selected by the user in said first library, and
- means (12) for importing the manufacturing data accessed into the manufacturing file (14) for said object.

8. Interface according to claim 7, **characterised in that** said means (12) for accessing said second library (17) and said means for importing data (16") are arranged to operate automatically at the time of the transfer of data between said design system (2) and said manufacturing system (12).

9. Interface according to either of claims 7 and 8, **characterised in that** said first library (7) comprises, for each item (6'), a reference and a graphic representation (Fig. 2) which are compatible with said design system (2).

10. Interface according to one of claims 7 to 9, **characterised in that** said second library (17) comprises, for each item (6' - 16'), a reference (16') and a range of manufacture (16") enabling the geometrical characteristics of said item to be obtained, in particular
- the direction of machining or forming,
- the direction of processing of the material,
- the angular orientation of the machining or the forming.
- information relating to the coating or the surface finish of the material to be processed, or
- the direction and/or speed of machining.

## Patentansprüche

1. Verfahren zum Übertragen von Computerdaten zwischen einem System zum computergestützten Entwerfen (CAD) und einem System zum computergestützten Fertigen (CAM), wobei die Daten Informationen in Bezug auf die Geometrie eines herzustellenden Gegenstandes einschließen, **dadurch gekennzeichnet, dass** das Verfahren darin besteht. mindestens bestimmte Elemente der Geometrie des Gegenstandes zu definieren durch:
- Zugriff auf eine erste Bibliothek (7) ausgehend vom Entwurfsystem (2);
- Auswahl von mindestens einem Artikel (6'), der in der ersten Bibliothek vorbestimmt ist;
- Import der Referenzen des Artikels (6') in die Definitionsdatei (4) des Gegenstandes (5) im Entwurfsystem;
- Übertragung (10) der Definitionsdatei des Gegenstandes vom Entwurfsystem zum Fertigungssystem (12), wobei der Artikel durch Referenz (6' - 16') identifiziert wird;
- Zugriff auf eine zweite Bibliothek (17), die mit dem Fertigungssystem verbunden ist, und Auswahl von Daten (16") zur Fertigung in Abhängigkeit von Referenzen (16'), welche jenen des Artikels (6') in der Definitionsdatei entsprechen, und
- Import der Fertigungsdaten (16") in die Fertigungsdatei (14) des Gegenstandes.

2. Verfahren zum Übertragen von Daten nach Anspruch 1, **dadurch gekennzeichnet, dass** der Artikel (6') eine standardisierte Darstellung einer komplexen Form umfasst, die durch Verformung oder Bearbeitung zu erhalten ist.

3. Verfahren zum Übertragen von Daten nach Anspruch 2, **dadurch gekennzeichnet, dass** die Fertigungsdaten (16''), die in der zweiten Bibliothek (17) gespeichert sind, für jeden Artikel (6') mindestens eine der folgenden Informationen enthalten:
- Ursprung des Stanzens, der Bearbeitung oder der Verformung;
- Richtung der Verformung des Materials;
- Winkelausrichtung der Verformung;
- Informationen betreffend den Überzug oder den Oberflächenzustand des zu behandelnden Materials;
- Richtung und/oder Geschwindigkeit der Bearbeitung.

4. Verfahren zum Übertragen von Daten nach einem der vorhergehenden Ansprüche, **dadurch gekennzeichnet, dass** jeder Artikel (6') in der ersten Bibliothek durch ein einfaches Symbol (Figur 2) identifiziert wird, welches es ermöglicht, seine Art oder seine Haupteigenschaften zu erkennen.

5. Anwendung des Verfahrens zum Übertragen von Daten nach einem der vorhergehenden Ansprüche auf die Fertigung von Teilen (5) aus Buckelblech, wobei die Artikel (6') den Verformungen entsprechen, welche durch Ziehen eines Blechs erhalten werden.

6. Anwendung nach Anspruch 5 für die Fertigung von Materialkarosserien (5).

7. Schnittstelle zwischen einem System zum computergestützten Entwerfen (CAD) und einem System zur computergestützten Fertigung (CAM), wobei die Schnittstelle für das Übertragen von Daten vorgesehen ist, welche Informationen in Bezug auf die Geometrie eines herzustellenden Gegenstandes einschließen, **dadurch gekennzeichnet, dass** die Schnittstelle umfasst:
- eine erste Bibliothek (7), die ausgehend vom Entwurfssystem (2) zugänglich ist, wobei die erste Bibliothek eine Liste von Artikeln (6') umfasst, welche besonderen geometrischen Eigenschaften des Gegenstandes (5) entsprechen, wobei jeder Artikel durch eine Referenz identifiziert ist;
- eine zweite Bibliothek (17), die mit dem Fertigungssystem (12) verbunden ist. wobei die zweite Bibliothek für jede Referenz (16'), die einem Artikel (6') der ersten Bibliothek entspricht, eine Gruppe von Fertigungsdaten (16") umfasst, die mit dem Fertigungssystem kompatibel sind und es ermöglichen, die entsprechenden besonderen geometrischen Eigenschaften zu erhalten;
- Mittel (12) für das Zugreifen auf Fertigungsdaten (16'') in der zweiten Bibliothek in Abhängigkeit von Referenzen (16'). welche mindestens einem Artikel (6') entsprechen, der vom Benutzer in der ersten Bibliothek ausgewählt wurde, und
- Mittel (12) zum Importieren der Fertigungsdaten, auf die zugegriffen wurde, in die Fertigungsdatei (14) des Gegenstandes.

8. Schnittstelle nach Anspruch 7, **dadurch gekennzeichnet, dass** die Mittel (12) für das Zugreifen auf die zweite Bibliothek (17) und die Mittel zum Importieren der Daten (16'') vorgesehen sind, um während der Übertragung von Daten zwischen dem Entwurfsystem (2) und dem Fertigungssystem (12) automatisch zu arbeiten.

9. Schnittstelle nach einem der Ansprüche 7 oder 8, **dadurch gekennzeichnet, dass** die erste Bibliothek (7) für jeden Artikel (6') eine Referenz und eine grafische Darstellung (Figur 2) umfasst, die mit dem Entwurfsystem (2) kompatibel sind.

10. Schnittstelle nach einem der Ansprüche 7 bis 9, **dadurch gekennzeichnet, dass** die zweite Bibliothek (17) für jeden Artikel (6' - 16') eine Referenz (16') und ein Fertigungsprogramm (16") umfasst, die es erlauben, die geometrischen Eigenschaften des Artikels zu erhalten, und insbesondere
- die Art der Bearbeitung oder der Verformung;
- die Richtung der Behandlung des Materials;
- die Winkelausrichtung der Bearbeitung oder der Verformung;
- Informationen betreffend den Überzug oder den Oberflächenzustand des zu behandelnden Materials, oder
- die Richtung und/oder Geschwindigkeit der Bearbeitung.
